# EUROPEAN PATENT APPLICATION

(11) **EP 2 617 963 A2**
(43) Date of publication of application: **24.07.2013**
(21) Application number: 13151611.4
(22) Date of filing: 17.01.2013
(51) Int. Cl.: F02C 7/224

(54) **Liquid fuel heating system**

(30) Priority: 23.01.2012 US 201213355579
(71) Applicant: General Electric Company, Schenectady, New York 12345 (US)
(72) Inventor: Hains, John Victor, Greenville, SC South Carolina 29615 (US); Kraemer, Gilbert Otto, Greenville, SC South Carolina 29615 (US); Mobley, Gary Cletus, Greenville, SC South Carolina 29615 (US); Gupta, Abhijit, 560066 Bangalore, Karnataka (IN)
(74) Representative: Cleary, Fidelma

(57) **Abstract**

The present invention provides a liquid fuel heating system (100) for heating a flow of fuel (20) for a gas turbine engine (12). The liquid fuel system (100) may include a flow of steam (135), an ejector/educator (150) in communication with the flow of fuel (20) and the flow of steam (135) for mixing therewith, and a high pressure pump (160) downstream of the ejector/educator (150).

## Description

### TECHNICAL FIELD

The present application and the resultant patent relate generally to gas turbine engines and more particularly relate to a liquid fuel heating system using steam injection into a liquid fuel stream via a flow of steam from a heat recovery steam generator or elsewhere.

### BACKGROUND OF THE INVENTION

Generally described, a combined cycle power plant uses a combination of a gas turbine and a steam turbine to produce electrical power or otherwise drive a load. Specifically, a gas turbine cycle may be operatively combined with a steam turbine cycle by way of a heat recovery steam generator ("HRSG") and the like. The HRSG is a heat exchanger that allows feed water for the steam generation process to be heated by the hot combustion gases of the gas turbine exhaust. The primary efficiency of the combined cycle arrangement is the utilization of the otherwise "wasted" heat of the gas turbine engine. Specifically, the efficiency of the HRSG is related to the efficiency of the heat transfer between the gas turbine combustion gases (on the "hot side") and the feed water and steam (on the "cold side").

Although a combined cycle system is efficient, there are numerous types of parasitic losses involved in the overall operation of a combined cycle system. For example, an electric heater may be used to heat the flow of fuel to the gas turbine engine so as to improve overall turbine performance. Although heating the flow of fuel improves overall gas turbine performance, operation of the electric heater also is a parasitic loss.

There is thus a desire for an improved combined cycle system with reduced parasitic losses. For example, the parasitic losses associated with an electric heater for the flow of fuel may be reduced and/or eliminated so as to improve overall system efficiency. Likewise, otherwise wasted heat also may be used to provide useful work herein.

### SUMMARY OF THE INVENTION

The present invention resides in a liquid fuel heating system for heating a flow of fuel for a gas turbine engine. The liquid fuel system may include a flow of steam, an ejector/eductor in communication with the flow of fuel and the flow of steam for mixing therewith, and a high pressure pump positioned downstream of the ejector/eductor.

The present invention further resides in a method of heating a flow of fuel for use in a gas turbine. The method may include the steps of pumping the flow of fuel, diverting a flow of steam from a heat recovery stream generator, mixing the flow of fuel and the flow of steam in an ejector/eductor to heat the flow of fuel in a mixed flow, and pumping the mixed flow to the gas turbine.

The present invention further resides in a combined cycle system. The combined cycle system may include a gas turbine engine, a heat recovery steam generator for generating a flow of steam, and a liquid fuel heating system as described above.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Embodiments of the present invention will now be described, by way of example only, with reference to the accompanying drawings in which:
Fig. 1 is a schematic diagram of a combined cycle system with a gas turbine engine, a steam turbine, and a heat recovery steam generator.
Fig. 2 is a schematic diagram of a known liquid fuel heating system with an electric heater.
Fig. 3 is a schematic diagram of a liquid fuel heating system as may be described herein.
Fig. 4 is a further schematic diagram of the liquid fuel heating system of Fig. 3.

### DETAILED DESCRIPTION

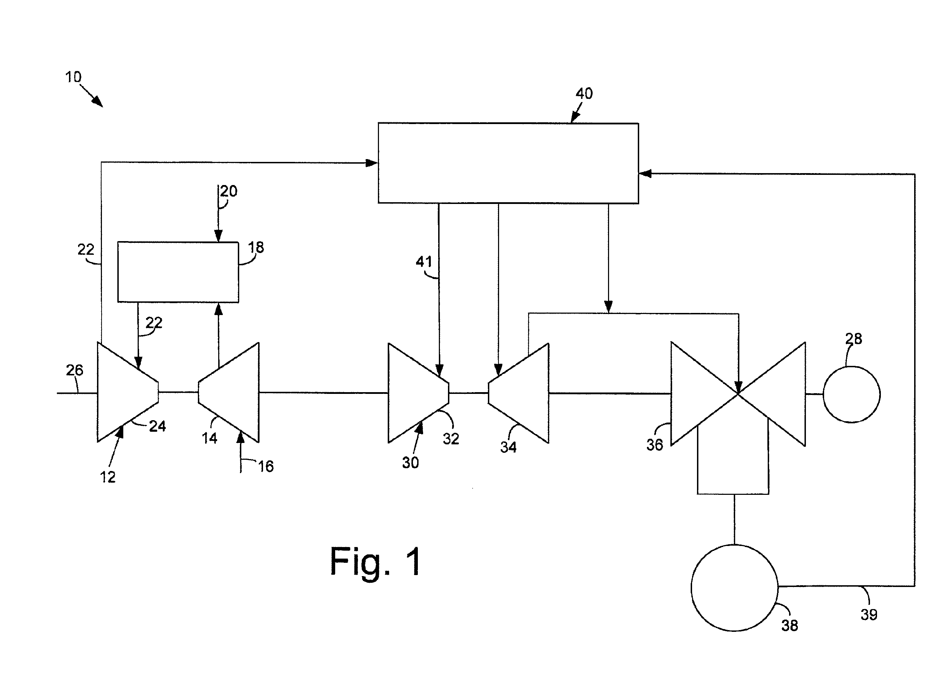

Referring now to the drawings, in which like numerals refer to like elements throughout the several views, Fig. 1 shows a schematic diagram of a combined cycle system 10. The combined cycle system 10 may include a gas turbine engine 12. The gas turbine engine 12 may include a compressor 14. The compressor 14 compresses an incoming flow of air 16. The compressor 14 delivers the compressed flow of air 16 to a combustor 18. The combustor 18 mixes the compressed flow of air 16 with a pressurized flow of fuel 20 and ignites the mixture to create a flow of combustion gases 22. Although only a single combustor 18 is shown, the gas turbine engine 12 may include any number of combustors 18. The flow of combustion gases 22 is in turn delivered to a turbine 24. The flow of combustion gases 22 drives the turbine 24 so as to produce mechanical work. The mechanical work produced in the turbine 24 drives the compressor 14 via a shaft 26 and an external load 28 such as an electrical generator and the like. The gas turbine engine 12 may use natural gas, various types of syngas, and other types of fuels. The gas turbine engine 12 may have different configurations and may use other types of components.

The combined cycle system 10 also may include a steam turbine 30. The steam turbine 30 may include a high pressure section 32, an intermediate pressure section 34, and one or more low pressure sections 36 with multiple steam admission points at different pressures. The low pressure section 36 may exhaust into a condenser 38. One or multiple shafts 26 may be used herein. Other components and other configurations also may be used herein.

The combined cycle system 10 also may include a heat recovery steam generator 40 ("HRSG"). The HRSG 40 may include a number of sections. Each section of the HRSG 40 may include one or more economizers, evaporators, and superheaters. A flow of condensate 39 from the condenser 38 may be fed into the HRSG 40. The condensate flow 39 passes through the HRSG 40 and exchanges heat with the flow of exhaust gases 22 from the gas turbine engine 12 and turns into a flow of steam 41. The steam flow 41 produced in the HRSG 40 then may be used to drive the steam turbine 30 or used for other purposes. Other components and other configurations may be used herein.

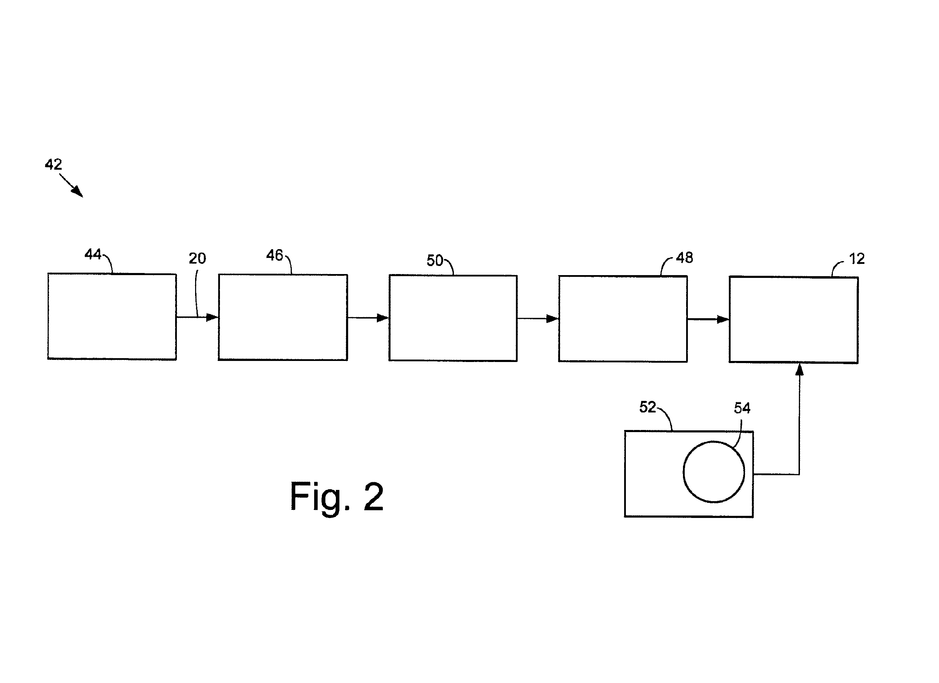

Fig. 2 shows an example of a known liquid fuel heating system 42. The flow of fuel 20 generally is stored on a fuel skid or in a fuel tank 44. The fuel tank 44 may be remote from the gas turbine engine 12. The flow of fuel 20 may be pumped via a forward pump unit 46 to a fuel heater 50 and then to an accessories base or skid 48 adjacent to the gas turbine engine 12. The fuel heater 50 may be an electric heater and the like. The fuel heater 50 thus may be considered a parasitic loss given the energy requirements to heat the flow of fuel 20. Other components and other configurations also may be used herein.

The combined cycle system 10 also may include a water injection system 52. The water injection system 52 may include a de-mineralized water supply, a high pressure water injection pump 54, and a number of valves. In certain types of dual fuel combustors 18, water may be applied during liquid fuel operations above about a thirty percent (30%) load so as to maintain overall emissions in compliance with applicable regulations. The water injection pump 54 also may be considered a parasitic drain on overall system efficiency. Other components and other configurations may be used herein.

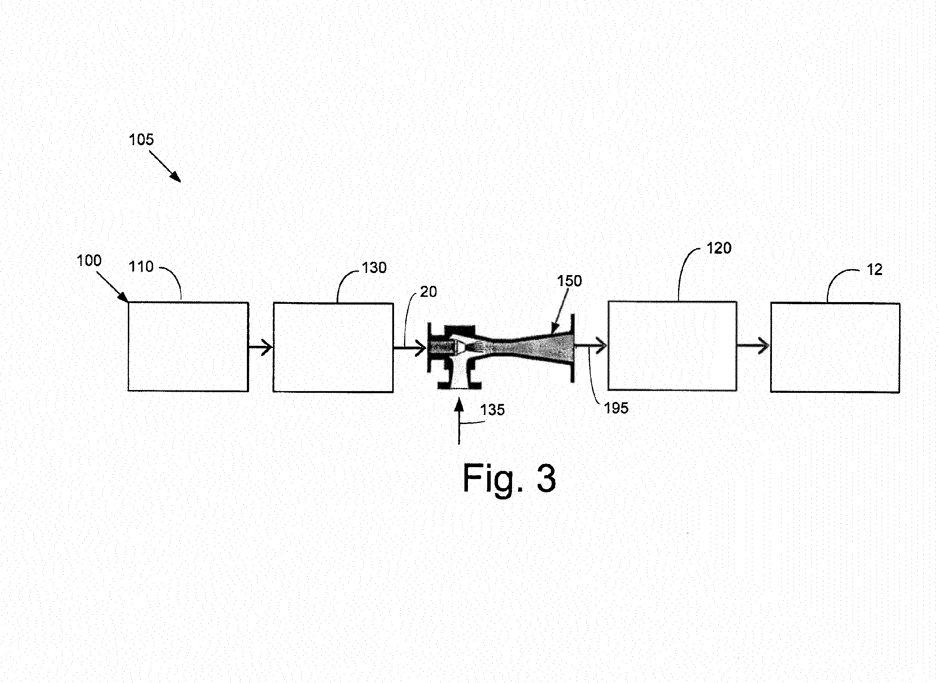

Fig. 3 shows a schematic diagram of a liquid fuel heating system 100 as may be described herein for use with a combined cycle system 105. The liquid fuel heating system 100 may include the flow of fuel 20 positioned in a fuel skid or a fuel tank 110. The flow of fuel 20 may be pumped to an accessories skid 120 via one or more forward pump units 130. The accessories skid 120 may be adjacent to the gas turbine engine 12. The accessories skid 120 also may be in communication with a flow of steam 135 from the HRSG 40 or otherwise. The accessories skid 120 may be similar to the accessories skid 48 described above, but without the use of the fuel heater 50 and the water injection system 52. Other components and other configurations may be used herein.

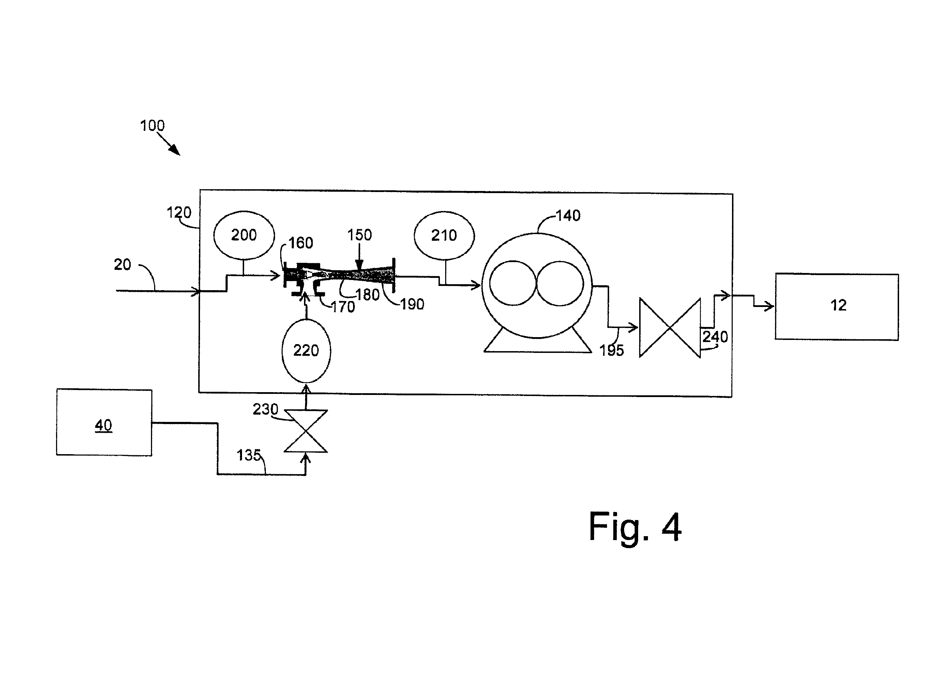

Fig. 4 is a schematic view of the accessories skid 120 of the liquid fuel heating system 100. A high pressure pump 140 may be positioned on the accessories skid 120. The high pressure pump 140 may be similar to the high pressure pump 54 of the water injection system 52 described above.

The liquid fuel heating system 100 also may include an ejector/eductor 150 positioned about the accessories skid 120. The ejector/eductor 150 is a mechanical device without any moving parts. Instead, the ejector/eductor 150 mixes two fluid streams based upon a momentum transfer between a motive fluid and a suction fluid. A motive inlet 160 may be in communication with the flow of fuel 20 under pressure. The ejector/eductor 150 also may include a suction inlet 170. The suction inlet 170 may be in communication with the flow of steam 135 from the HRSG 40. The flow of fuel 20 thus is the motive fluid that provides suction on the flow of steam 135. The ejector/eductor 150 also includes a mixing tube 180 and a diffuser 190. Other types of mixers, mixing pumps, and the like may be used as the ejector/eductor 150.

The flow of fuel 20 enters the motive inlet 160 as the motive flow and is reduced in pressure below that of the flow of steam 135 as the suction flow is accelerated therewith. The flows are mixed in the mixing tube 180 and flow through the diffuser 190 as a mixed flow 195. The mixed flow 195 may be discharged at a pressure greater than the suction stream yet lower than the motive stream. As such, the steam injection at the suction inlet 170 may be at a negative pressure or a vacuum. Specifically, overall suction capability for the ejector/eductor 150 may be based upon the net positive suction head available therein. Other components and other configurations also may be used herein.

The ejector/eductor 150 may be positioned just upstream of the high pressure pump 140. An inlet temperature sensor 200 and an outlet temperature sensor 210 may be positioned about the ejector/eductor 150. A flow meter 220 and the like may be positioned about the suction inlet 170. Other types of control devices may be used herein. One or more control valves also may be used herein such as a steam valve 230 in communication with the flow of steam 135 and a safety valve 240 downstream of the high pressure pump 240 for the mixed flow 195. Other components and other configurations also may be used herein.

Based upon the temperature sensors 200, 210, the change in temperature and heat output of the flow of steam 135 may be monitored. The valve 230 about the suction inlet 170 may be opened or closed based upon the needs of the gas turbine engine 12. For example, the temperature of the flow of fuel 20, the viscosity of the flow of fuel 20, and the liquid fuel water content may be considered. The flow meter 220 also may be used to determine the liquid fuel content. Specifically, the liquid fuel content may be monitored and controlled via the flow meter 220. Other components and other configurations may be used herein. An algorithm may be used to control the addition of steam to the fuel system based on multiple variables such as operating variables and properties of the fuel. Other types of control systems may be used herein.

Instead of using the electric heater 50 and the water injection system 52, the liquid fuel heating system 100 heats the flow of fuel 20 via the direct injection of the flow of steam 135. The flow of steam 135 heats the flow of fuel 20 such that its viscosity may be less than about 10 to about 20 centiStokes or so. Any additional heat imparted by the flow of steam 135 to the flow of fuel 20 will be in the form of extra energy in the flow of fuel 20 so as to increase the overall output of the gas turbine engine 12. The amount of steam 135 injected into the flow of fuel 20 may be controlled to ensure that the water content does not violate combustion hardware thresholds. The flow of steam 135 may be injected into the flow of fuel 20 before the inlet of the high pressure pump 140 to ensure proper mixing and to ensure that no vapor pockets develop. Once the flow of steam 135 is injected, the mixed fuel 20 has imparted all of the energy therein to raise the liquid fuel temperature.

The liquid fuel heating system 100 thus removes the parasitic loses generally incurred via the fuel heater 50. Rather, the liquid fuel heating system 100 may use the otherwise wasted flow of steam 135 from the HRSG 40 or otherwise. The liquid fuel heating system 100 thus heats the flow of fuel 20 and imparts additional energy therein without the electric heater. Moreover, overall component life may be increased by injecting the flow of steam 135 upstream of the combustion hardware so as to prevent cracking or damage to hot gas path parts. Overall efficiency for the combined cycle system 110 thus may be increased. The actual state of the steam/water entering the gas turbine combustor may be a function of the physical and chemical properties of the resultant mixture at the fuel nozzle exit orifice(s). The steam chemistry also may be of suitable chemical quality for injection into a gas turbine.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. A liquid fuel heating system (100) for heating a flow of fuel (20) for a gas turbine engine (12), comprising:
a flow of steam (135);
an ejector/eductor (150) in communication with the flow of fuel (20) and the flow of steam (135) for mixing therewith; and
a high pressure pump (140) downstream of the ejector/educator (150).

2. The liquid fuel heating system of claim 1, further comprising a heat recovery steam generator (40) for the flow of steam (135).

3. The liquid fuel heating system of claim 1 or 2, further comprising an accessories skid (120) with the ejector/eductor (150) and the high pressure pump (140) thereon.

4. The liquid fuel heating system of any of claims 1 to 3, wherein the ejector/eductor (150) comprises a motive inlet (160) in communication with the flow of fuel (20).

5. The liquid fuel heating system of any of claims 1 to 4, wherein the ejector/eductor (150) comprises a suction inlet (170) in communication with the flow of steam (135).

6. The liquid fuel heating system of any of claims 1 to 5, wherein the ejector/eductor (150) comprises a diffuser (190) in communication with the high pressure pump (140).

7. The liquid fuel heating system of any preceding claim, further comprising an inlet temperature sensor (200) upstream of the ejector/eductor (150) and an outlet temperature sensor (210) downstream of the ejector/educator (150).

8. The liquid fuel heating system of any preceding claim, further comprising at least one of a flow meter (220) and a steam valve (230) positioned about the flow of steam (135).

9. The liquid fuel heating system of any preceding claim, further comprising a safety valve (240) positioned downstream of the high pressure pump (135).

10. A method of heating a flow of fuel (20) for use in a gas turbine (12), comprising:
pumping the flow of fuel (20);
diverting a flow of steam (135) from a heat recovery stream generator (40);
mixing the flow of fuel (20) and the flow of steam (135) in an ejector/eductor (150) to heat the flow of fuel in a mixed flow (195); and
pumping the mixed flow (195) to the gas turbine (12).

11. The method of claim 10, wherein the step of pumping the flow of fuel (20) comprises pumping the flow of fuel (20) to an accessories skid (120).

12. The method of claim 10 or 11, wherein the step of pumping the flow of fuel (20) comprises pumping the flow of fuel (20) to a motive inlet (160) of the ejector/educator (150).

13. The method of any of claims 10 to 12, wherein the step of diverting a flow of steam (135) comprises diverting the flow of stream (135) to a suction inlet (170) of the ejector/educator (150).

14. The method of any of claims 10 to 13, further comprising measuring a temperature of the flow of fuel (20) upstream and downstream of the ejector/educator (150).

15. A combined cycle system, comprising:
a gas turbine engine;
a heat recovery steam generator for generating a flow of steam; and
the liquid fuel heating system of any claims 1 to 9
